Europäisches Patentamt

European Patent Office

Office européen des brevets

(19)

(11) Publication number: **0 046 086**
**A2**

(12) **EUROPEAN PATENT APPLICATION**

(21) Application number: **81303655.5**

(22) Date of filing: **11.08.81**

(51) Int. Cl.³: **H 01 M 4/90**
**H 01 M 4/88**

(30) Priority: **12.08.80 GB 8026210**

(43) Date of publication of application:
**17.02.82 Bulletin 82/7**

(84) Designated Contracting States:
**BE DE FR GB SE**

(71) Applicant: **The British Petroleum Company Limited**
**Britannic House Moor Lane**
**London EC2Y 9BU(GB)**

(72) Inventor: **Brown, David Emmerson**
**The British Petroleum Company Ltd. Chertsey Road**
**Sunbury-on-Thames Middlesex, TW16 7LN(GB)**

(72) Inventor: **Mahmood, Mahmood Nouraldin**
**The British Petroleum Company Ltd. Chertsey Road**
**Sunbury-on-Thames Middlesex, TW16 7LN(GB)**

(72) Inventor: **Man, Maurice Chuen Mo**
**The British Petroleum Company Ltd. Chertsey Road**
**Sunbury-on-Thames Middlesex, TW16 7LN(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) **Hydrophobic electrodes.**

(57) This invention relates to hydrophobic electrodes and a method of producing the same. The hydrophobic electrodes have a substrate on which is deposited a compound of (i) at least one metal selected from nickel, cobalt, iron and titanium and (ii) at least one metal selected from molybdenum, vanadium and tungsten. A homogeneous solution containing the compound of these metals is mixed with a dispersion of a hydrophobic polymer, and the mixture evaporated so as to leave behind an oxide of the electrocatalytic components bound in the polymer. The oxide is thereafter reduced to obtain the desired hydrophobic electrodes. The electrodes have good stability and exhibit low overvoltage especially when used as an anode.

EP 0 046 086 A2

1

# HYDROPHOBIC ELECTRODES

The present invention relates to porous, hydrophobic electrodes, in particular to hydrophobic polymer bonded hydrogen anodes for use in fuel cells, and to a method of preparation of such electrodes.

Early in the development of electrodes for fuel cells it was realised that porous, hydrophobic electrodes were desirable especially for use as a hydrogen anode in order to achieve proper control of electrode wetting and to prevent flooding thereof by the electrolyte so that both the reaction gases and the electrolyte had satisfactory access to the electro-catalyst in the electrode. Methods of producing such porous, hydrophobic electrodes are well documented. For example, methods of producing porous polytetrafluoro-ethylene (PTFE) bonded electrodes are described in (i) Belgian Patent No: 613375, (ii) an article entitled, "A New High Performance Fuel Cell Employing Conducting − Teflon Electrodes and Liquid Electrolytes", by Niedrach, L.W. and Alford, H.R. in the Journal of the Electrochemical Society, vol. 112 (2), 1965, pp 117−124, and (iii) an article entitled, "Reduction of Oxygen on Teflon−Bonded Platinum Electrodes" by Vogel, W.M. and Lundquist, J.T. in the Journal of the Electrochemical Society, Vol 117 (2), 1970, pp 1512−1516.

According to these publications, the usual procedure for producing the finished electrode is as follows. A slurry of an electrocatalyst in a PTFE suspension is spread or sprayed on an aluminium foil, two such foils coated with the PTFE-catalyst mix are then pressed and sintered at elevated temperature and pressure onto a suitable supporting screen sandwiched there-between in such a way that the aluminium foils face outwards and the PTFE-catalyst mix coatings face the screen, and the aluminium foil is finally dissolved from the electrode eg in warm alkali, to produce the finished electrode.

This process of producing hydrophobic electrodes is rather complicated and time consuming. Moreover, the electrocatalyst used is relatively expensive, eg platinum metal or platinum black, in order to achieve optimum performance by the electrode in respect of electrode activity, current density, overvoltage and mechanical stability. Attempts to reduce the cost of the electrode in respect of these characteristics by using electrocatalysts based on cheaper materials have not been entirely successful because of the manufacturing costs involved in producing them in a high surface area form.

It has now been found that hydrophobic electrodes can be produced from relatively cheaper electrocatalysts while improving the performance thereof using a relatively simple technique.

Accordingly, the present invention is an electrode substrate having deposited thereon an electrocatalyst bonded in a hydrophobic binder, <u>characterised in that</u> the electrocatalyst comprises a compound of (i) at least one metal selected from a first group of iron, cobalt and nickel and (ii) at least one other metal selected from a second group of molybdenum, tungsten and vanadium.

According to a further embodiment the present invention is a method of producing a hydrophobic electrode having deposited thereon an electrocatalyst bonded by a hydrophobic binder <u>characterised in that</u> the bonded electrocatalyst is produced by a process comprising applying to an electrode substrate a coating of a mixture of (a) a homogeneous solution of the compounds of (i) at least one metal selected from the first group of iron, cobalt and nickel, and (ii) at least one other metal selected from a second group of molybdenum, tungsten and vanadium, each of which compound is capable of thermal decomposition to the metal oxide, optionally in the presence of an oxygen containing gas, and (b) a dispersion of a hydrophobic binder, heating the applied coating to a temperature betweem 100 and 350°C to decompose thermally the compounds to oxides and finally curing the oxides at a temperature above 300°C in a reducing atmosphere.

The electrode substrate on which the coating is applied according to the present invention may be of a relatively inexpensive material eg a metal such as for instance nickel, iron, copper, titanium, and alloys thereof or of other metallic substances plated with any of these materials. The substrate may be in the form of wire, mesh or cloth eg carbon cloth, screen gauze, or perforated sheet in any form. A nickel screen or nickel plated iron substrate is preferred.

The plurality of metals of which compounds are present in the homogeneous solution are compounds of (i) at least one metal selected from a first group of iron, cobalt and nickel and (ii) at least one other metal selected from a second group of molybdenum, vanadium and tungsten. Each of the compounds present in the solution should be capable of thermal decomposition to the corresponding oxide. Examples of compounds which may be used include the nitrates and chlorides of the metals particularly those in the first group and specifically for those in the second group, the molybdates, tungstates, and vanadates, such as eg ammonium paramolybdate, ammonium tungstate and ammonium metavanadate. The ratio of respective compounds in the homogeneous solution may be defined as the atom per cent of the metal(s) in the second group in relation to that of the total metal atoms from both groups in the solution. On this basis the atom % of the metal(s) in the second group in the homogeneous solution is suitably above 5, preferably above 10 and most preferably above 20.

The homogeneous solution of the metal compounds used for preparing an intimate mixture with a dispersion of the hydrophobic binder may be made up using an aqueous solvent such as for example water, acidic or alkaline systems or aqueous ethanol, or an organic solvent, eg methanol, ethanol, propanol, isopropanol, formamide or dimethyl formamide. The choice of a particular solvent will depend upon the solubility of the desired metal compounds in the solvent.

In certain aqueous systems there may be a tendency for one or more of the metal compounds to separate by precipitation, particularly on standing the solution even for a relatively short time. For example an aqueous solution containing nickel nitrate and ammonium molybdate tends to precipitate a compound on standing. In this case the homogeneous solution would not contain the recommended concentration of the constituents and may therefore give unsatisfactory results. We have found that this precipitation may be avoided, especially in the case of nickel/molybdenum systems by adding ammonia to the solution so as to bring the pH of the solution to about 9.

Alternatively, the homogeneous solution of the metal compounds may be prepared by evaporating a solution of the metals compounds to dryness, grinding the dried residue and finally thermally decomposing the ground residue in an oxygen containing atmosphere eg air. The resulting product may thereafter be mixed with a dispersion of the hydrophobic binder, if necessary after a further grinding step.

The hydrophobic binder is suitably a hydrophobic polymer and preferably a polyfluoro-olefin polymer. The polyfluoro-olefin polymer is suitably polytetrafluoro-ethylene (PTFE) readily available as the proprietary product Teflon (Registered Trade Mark). The polymer is suitably used as an aqueous dispersion. The desired mixture is prepared simply by intimately mixing the homogeneous solution of the electrocatalyst with the hydrophobic polymer dispersion. In the mixture, the ratio by weight of the hydrophobic polymer to the electrocatalyst metals is suitably between 1:7 and 1:1.06, preferably between 1:6 and 1:2.

The mixture of the homogeneous solution and the polymer dispersion may be applied to the substrate surface to be coated for example by dipping, spraying, or brushing. The coated substrate is thereafter heated at elevated temperature to decompose the metal compounds into the corresponding oxides. The decomposition is suitably carried out in air at a temperature between 100 and 350°C, preferably between 250 and 350°C. The compounds readily decompose to the corresponding oxides and the duration of the decomposition step is usually under 15 minutes, eg 2 to 10 minutes. The operation of applying a coat of the mixture to the substrate followed by thermal decomposition may be repeated several times to ensure adequate coverage of the substrate surface with the metal oxides. Thereafter a backing strip of a hydrophobic polymer may be applied to the coated

0046086

substrate. The backing strip is suitably of the same material as the hydrophobic binder used in the dispersion.

The substrate coated with the metal oxides is then cured by heating in an oven in a reducing atmosphere at a temperature above 300°C. The precise reduction temperature used will depend upon the sintering temperature of the hydrophobic polymer used. For example, in the case of PTFE, it is suitably between 300 and 370°C. The reducing atmosphere is preferably hydrogen and the heating temperature is preferably between 320 and 350°C for a PTFE binder.

In some cases it may not be necessary to have a separate thermal decomposition step since the time taken in raising the temperature to the level at which reduction takes place, eg around 300°C together with the ease of the decomposition ensures that the compounds are thermally decomposed to the corresponsing oxides, especially in the presence of air prior to the reduction step.

By carrying out the process of the present invention the electrodes produced have a deposit which is a compound of the electrocatalytic metals bonded by the hydrophobic polymer. The compound is believed to contain a face-centred cubic alloy as characterised by X-ray diffraction (XRD) studies and cell parameters.

The steps of electrode preparation may be adapted to produce an appropriate level of catalyst loading on the substrate surface. The catalyst loading is suitably above 5 mg/cm$^2$ (based on the weight of the active species deposited on the substrate surface), preferably above 10 mg/cm$^2$. The eventual loading will depend upon the mechanical stability and integrity of the coating required, the substrate used and the cell in which the electrode is to be used. It has however been found that by using a method of electrode preparation according to the present invention the electrodes will deliver currents of the order of 200 mA/cm$^2$ when polarised at about 25 mV vs RHE (iR corrected) at 70°C in 30% KOH solution. This degree of reduction in electrode potential will not only enable operation of the cells at high current density but will also significantly increase the economic efficiency of such cells.

The present invention is further illustrated with reference to the following Examples.

<u>Examples 1-6</u>

(a) <u>Preparation of a Homogeneous Electrocatalyst Solution</u>

123.59 g ammonium molybdate $((NH_4)_6Mo_7O_{24}.4H_2O)$ and 296.63 g nickel nitrate $(Ni(NO_3)_2.6H_2O)$ were separately dissolved in 300 ml and 700 ml of distilled water respectively. The two solutions were then mixed and 350 ml of 0.88 specific gravity ammonia solution was added. A clear blue homogeneous solution of the electrocatalyst was obtained which had a Ni:Mo atom ratio of 60:40.

(b) <u>Preparation of PTFE - Bonded Electrocatalyst Bearing Electrodes:</u>

100 ml of the homogeneous electrocatalyst solution prepared as in (a) above was mixed with 6.72 g of aqueous PTFE suspension which was a proprietary product 'Fluon' (Registered Trade Mark, ex-ICI Grade GPI) and the mixture was sprayed onto both sides of a Dutch Twill Weave (DTW), 60 mesh nickel screen heated to 200 - 250°C on a hot plate. The spraying operation was repeated every five minutes several times until all the perforations on the screen material were fully blocked. The electrode was then subjected to thermal decomposition and reduction in a hydrogen atmosphere by gradually raising the temperature at 350°C for three hours. Six electrodes were made and electrode loadings were achieved which corresponded to the specific catalyst and PTFE loadings shown in the Table below. The performance of these electrodes was monitored by measuring the electrode potential of each electrodes tested as follows:

(c) <u>Performance of the Electrodes:</u>

A three-compartment all Pyrex (Registered Trade Mark) glass cell, containing 30% w/v KOH electrolyte was placed in a thermostatic water bath maintained at 70°C. A platinised platinum black hydrogen electrode (RHE) was placed in the same solution in the reference electrode compartment and a PTFE - bonded porous Ni-Mo electrode of the present invention as prepared above with minor variations (see Tables below) in electrocatalyst loadings and heat treatment/reduction techniques was used as the "floating gas electrode" on the surface of the KOH electrolyte. A Luggin capillary leading to the reference electrode housing was positioned immediately beneath the gas electrode and hydrogen gas was fed directly above the gas electrode. The tests were carried out with the electrodes operating at atmospheric hydrogen gas pressure.

To evaluate the hydrogen oxidation activity the floating gas electrodes were first equilibrated in hydrogen atmosphere until the rest potential reached the reversible hydrogen potential (ie zero voltage vs RHE). Potentiodynamic polarisations were then carried out at a slow scan rate of 0.1 mV/sec from 0 to + 150 mV vs RHE. The electrode potentials and the current density achieved are shown in the Table below. All electrode potentials are iR corrected by the interrupter method.

TABLE 1

| Example No | Catalyst Loading mg/cm$^2$ | PTFE loading mg/cm$^2$ | Heat Treatment | | Electrode Potential (mV) at | | |
|---|---|---|---|---|---|---|---|
| | | | Separate Thermal Decomposition in air at 350°C for 1 hr | Reduction temp °C in H$_2$ for 3 hours | 50 mA/cm$^2$ | 100 mA/cm$^2$ | 200 mA/cm$^2$ |
| 1 | 13.0 | 5.6 | Yes | 330 | 26 | 67.5 | – |
| 2 | 16.6 | 7.1 | Yes | 300 | 37 | 93 | – |
| 3 | 11.4 | 4.9 | No | 350 | 6 | 25 | 80 |
| 4 | 14.0 | 6.0 | Yes | 350 | 28 | 75 | – |
| 5 | 29.4 | 12.6 | No | 350 | 15 | 62 | 62 |
| 6 | 12.4 | 2.2 | No | 350 | 12 | 24 | 58 |

Example 7

The process of Examples 1 - 6 above was repeated except for the following modification to step (b). The 60 mesh nickel screen after being sprayed with the mixture of electrocatalyst and PTFE dispersion was dried and the electrocatalytic coating thermally decomposed at about 250°C after each spray. After several sprays, the electrode was pressed in a vice sandwiched between two nickel foils. The spraying and pressing operations were repeated several times until no holes could be detected on the nickel screen. A thin PTFE tape, cut to the size of the screen was hot pressed at 300°C onto one side of the electrode at a pressure of up to 15 tons per 0.75 $cm^2$ area for five minutes. Finally, the coated electrode was reduced in a hydrogen atmosphere at 350°C for four hours raising the temperature at the rate of 6°C/minute. The hydrogen flow rate used was 75cc/minute.

Example 8

In this Example, the ammoniacal nickel—molybdenum solution of Examples 1 - 6 (a) above was evaporated to dryness in a steam bath. The dried residue so formed was ground in a pestle and mortar and then decomposed in air at 300°C. The resulting powder was further ground in a cup mill and was then mixed with an aqueous PTFE dispersion. The subsequent procedure of forcing the electrocatalyst/PTFE mixture to fill the holes of the screen followed by application of a hydrophobic PTFE tape and reduction in an atmosphere of hydrogen was carried out in the same manner as in Example 7 above.

The performance tests on the electrodes of Examples 7 and 8 were carried out as in Examples 1 - 6 (c) above.

The characteristics and performance of the electrodes in Examples 7 and 8 are shown in Table 2 below.

## TABLE 2

### ELECTRODE CHARACTERISTICS AND PERFORMANCE

| Electrode from | Loading/$cm^2$ | | Electrode Potential(mV vs RHE) at | | |
|---|---|---|---|---|---|
| Example No | Catalyst/$cm^2$ | PTFE/$cm^2$ | 50mA/$cm^2$ | 100mA/$cm^2$ | 200mA/$cm^2$ |
| 7 | 32.2 | 9.6 | 7 | 13.5 | 23.5 |
| 8 | 18.4 | 7.5 | 5.2 | 15 | 44 |

Claims:-

1.  An electrode substrate having deposited thereon an electrocatalyst
    bonded in a hydrophobic binder, <u>characterised in that</u> the electro-
    catalyst comprises a compound of (i) at least one metal selected from
    a first group of iron, cobalt and nickel and (ii) at least one other
    metal selected from a second group of molybdenum, tungsten and
    vanadium.

2.  A method of producing a hydrophobic electrode having deposited thereon
    an electrocatalyst bonded by a hydrophobic binder <u>characterised in
    that</u> the bonded electrocatalyst is produced by a process comprising
    applying on an electrode substrate a coating of a mixture of (a) a
    homogeneous solution of the compounds of (i) at least one metal
    selected from the first group of iron, cobalt and nickel, and (ii) at
    least one other metal selected from a second group of molybdenum,
    tungsten and vanadium, each of which compound is capable of thermal
    decomposition to the metal oxide, optionally in the presence of an
    oxygen containing gas, and (b) a dispersion of a hydrophobic binder,
    heating the applied coating to a temperature between 100 and 350°C to
    thermally decompose the compounds to oxides and finally curing the
    oxides at a temperature above 300°C in a reducing atmosphere.

3.  A method according to claim 2 wherein the ratio of respective
    compounds in the homogeneous solution defined as the atom per cent of
    the metal(s) in the second group in relation to that of the total
    metal atoms from both groups in the solution is above 5.

4.  A method according to claim 2 wherein the homogeneous solution of the
    metal compounds used for preparing a mixture thereof with a dispersion
    of the hydrophobic binder is an aqueous solution.

5. A method according to claim 2 or 3 wherein the homogeneous solution of the metal compounds used for preparing a mixture thereof with a dispersion of the hydrophobic binder is produced by evaporating a solution of the metal compounds to dryness, grinding the dried residue and finally thermally decomposing the ground residue in an oxygen containing atmosphere.

6. A method according to any one of the preceding claims 2 - 5 wherein the ratio by weight of the hydrophobic binder to the electrocatalyst metals in the mixture is between 1:7 and 1:0.6.

7. A method according to any one of the preceding claims 2 - 6 wherein the hydrophobic binder is a hydrophobic polymer of the polyfluoro-olefin polymer type.

8. A method according to any one of the preceding claims 2 - 8 wherein the electrocatalyst bonded by a hydrophobic binder comprises a face-centred cubic alloy of nickel and molybdenum.

9. An electrode substrate having deposited thereon an electrocatalyst in a hydrophobic binder according to claim 1 characterised in that the electrocatalyst comprises a face-centred cubic alloy of nickel and molybdenum.